# EUROPÄISCHE PATENTSCHRIFT

(11) **EP 2 062 227 B1**
(45) Veröffentlichungstag und Bekanntmachung des Hinweises auf die Patenterteilung: **21.12.2011**
(21) Anmeldenummer: 07802151.6
(22) Anmeldetag: 05.09.2007
(51) Int. Cl.: G07C 9/00

(54) **SYSTEM ZUM ÜBERWACHEN EINES GEFAHRENBEREICHES, INSBESONDERE EINES FAHRZEUGS**
SYSTEM FOR MONITORING A HAZARDOUS AREA, ESPECIALLY OF A VEHICLE
SYSTÈME DE CONTRÔLE D'UNE ZONE DANGEREUSE, NOTAMMENT D'UN VÉHICULE

(30) Priorität: 11.09.2006 DE 102006042547
(43) Veröffentlichungstag der Anmeldung: 27.05.2009
(73) Patentinhaber: BARTEC BENKE GmbH, 21465 Reinbek/Hamburg (DE)
(72) Erfinder: BÖHM, Alfred, 94234 Viechtach (DE); BINDER, Wilhelm, 84113 Tiefenbach (DE); GRÜNERT, Rudolf, 94315 Straubing (DE); KELLER, Valeri, 94469 Deggendorf (DE)
(74) Vertreter: Heim, Hans-Karl
(86) Internationale Anmeldenummer: PCT/EP2007/007746
(87) Internationale Veröffentlichungsnummer: WO 2008/031523

(56) Entgegenhaltungen:
- WO-A-02/30706
- WO-A-2004/032091
- FR-A- 2 493 567
- US-A- 5 939 986
- US-A1- 2002 175 825
- US-A1- 2003 151 508
- US-A1- 2004 178 883
- US-A1- 2004 227 656

## Beschreibung

Die Erfindung betrifft ein System zum Überwachen eines Gefahrenbereiches, insbesondere eines Fahrzeuges, bevorzugt einer landwirtschaftlichen Maschine, gemäß dem Oberbegriff des Anspruchs 1. Ein solches System ist ausgebildet mit einer Transpondereinheit, die zum Erzeugen eines Transpondersignals bei Empfang eines ersten Feldes, welches ein Fernfeld ist, eingerichtet ist, und einer Basiseinheit, die zum Erzeugen des ersten Feldes um die Basiseinheit und zum Erzeugen eines Alarmsignals bei Empfang des Transpondersignals von der Transpondereinheit eingerichtet ist.

In landwirtschaftlichen Betrieben verunglückt jährlich eine Vielzahl von Personen, wobei die Unfälle nicht selten tödlich enden. Gefährdet sind insbesondere Kinder, bei denen in der Vergangenheit in einigen Ländern bis zur Hälfte der tödlichen Unfälle darauf zurückzuführen waren, dass sie von einem Traktor oder einer anderen Landarbeitsmaschine überrollt wurden.

Ein Grund der Unfälle kann häufig darin liegen, dass Kinder, die sich beim Anfahren bzw. Rangieren von landwirtschaftlichen Maschinen im unmittelbaren oder im mittelbaren Gefahrenbereich befinden, übersehen werden. Dies kann darauf zurückzuführen sein, dass sie sich dem Blickfeld des Fahrers entziehen oder der Fahrer seine Aufmerksamkeit anderen Vorgängen widmen muss.

Aber auch bei anderen Maschinen und/oder Fahrzeugen, wie beispielsweise Gabelstaplern, PKW, LKW, Müllfahrzeugen oder Milchsammelwagen, oder bei sonstigen beweglichen Maschinen und/oder Robotern besteht ein Unfallrisiko, wenn eine Person in den Gefahrenbereich gelangt.

Es ist bekannt, zur Überwachung eines Gefahrenbereiches ein Radarsystem zu verwenden, bei dem elektromagnetische Strahlung ausgesandt wird und das von einem im Gefahrenbereich befindlichen Objekt reflektierte Signal erkannt wird. Bei einem solchen Verfahren umfasst die Abstrahlcharakteristik häufig nicht den gesamten Gefahrenbereich. Insbesondere Bereiche unterhalb eines Fahrzeuges sind damit nur eingeschränkt zu erfassen. Außerdem ist das reflektierte Signal häufig sehr schwach, so dass die Reichweite möglicherweise nicht hinreichend ist.

Die DE 102 22 859 A1 offenbart ein System zur Präsenzanalyse von Objekten, die es erlaubt, das Abhandenkommen von Objekten bzw. von Wertgegenständen aus dem Umgebungsbereich einer Person nachzuweisen. Das System weist eine Signalsendeeinrichtung auf, die dem zu observierenden Objekt zugeordnet ist, sowie eine Empfangseinrichtung, die ein Signal von der Sendeeinrichtung erfasst.

Die US 2003/0151508 A1 betrifft eine Vorrichtung zur Erhöhung der Sicherheit in einer Arbeitszone, welche ein Fahrzeug umgibt. Dabei ist vorgesehen, Arbeiter in der Arbeitszone zu identifizieren und unautorisierte Arbeiter innerhalb dieser Arbeitszone zu warnen. Die Vorrichtung weist eine tragbare Einheit für den Arbeiter auf, welche Signale empfangen und senden kann. Ferner ist eine Kontrolleinheit vorgesehen, welche am Fahrzeug angeordnet ist, welche mit der tragbaren Einheit in der Arbeitszone kommuniziert, und welche ein Warnsignal an die tragbare Einheit überträgt, wenn der Arbeiter nicht autorisiert ist, sich in der Arbeitszone aufzuhalten. Dabei kann dem Bediener des Fahrzeugs eine Warnung ausgegeben werden, welche die Anwesenheit des unautorisierten Arbeiters in der Arbeitszone anzeigt. Ferner kann die tragbare Einheit in Antwort auf das ausgesandte Warnsignal eine Warnung an den Arbeiter ausgeben.

Aus der WO 02/30706 A1 ist ein Anwesenheits-Detektionssystem mit einem Lesegerät und einem Tag bekannt. Dabei ist vorgesehen, den Abstand zwischen dem Lesegerät und dem Tag auf Grundlage der Laufzeit eines Ultraschallimpulses unter Berücksichtigung der Schallgeschwindigkeit zu bestimmen.

Die WO 2004/032091 A1 offenbart ein Anwesenheitsnachweissystem zum Nachweis der Annäherung einer ersten mobilen Einheit an eine zweite mobile Einheit. Dabei ist ein Transceiver vorgesehen, welcher von der zweiten mobilen Einheit ein erstes Signal aussendet. Das erste Signal wird von einem Transponder an der ersten mobilen Einheit empfangen. Im Anschluss an eine eingestellte Zeitverzögerung sendet der Transponder ein zweites Signal in Antwort auf das erste Signal aus. Das zweite Signal wird vom Transceiver empfangen und die Zeit, welche zwischen der Aussendung des ersten Signals und dem Empfang des zweiten Signals verstrichen ist, wird bestimmt. Dabei ist ein Speicher vorgesehen, welcher mehrere Werte speichern kann, die jeweils einen vorher bestimmten Abstand repräsentieren, der die Grenze einer Alarmzone um die zweite mobile Einheit bildet. Die verstrichene Zeit, welche bestimmt wurde, wird mit den gespeicherten Werten verglichen, um zu bestimmen, ob sich die erste mobile Einheit in den Alarmzonen befindet.

Die US 5,939,986 betrifft ein Warnsystem, welches für mobile Arbeitsmaschinen vorgesehen ist, um eine Person vor einer potenziell gefährlichen Situation zu warnen, in dem Fall, dass die Person in eine gefährliche Arbeitszone der Maschine gelangt. Das Warnsystem weist einen Sender auf, welcher an der Maschine angeordnet ist, und welcher ein einheitliches Magnetfeld erzeugt, welches sich über eine äußere Peripherie der Maschine hinaus erstreckt und eine Gefahrenzone definiert. Ein Empfänger, der von der Person getragen wird, und der von dem Magnetfeld aktiviert wird, generiert ein Alarmsignal, um die Person zu warnen, wenn sie die Gefahrenzone betritt.

Die FR 2 493 567 betrifft einen Annäherungssensor für eine Maschine. Dabei ist vorgesehen, dass die Maschine anhält, wenn sich der Träger einer Fernbedienung zu nah an die Maschine annähert. Ferner ist vorgesehen, dass die Maschine ebenfalls dann anhält, wenn ein elektromagnetisches Signal, welches von einem Sender der Fernbedienung ausgesandt wird, ausbleibt.

In der US 2002/0175825 A1 wird ein Warnsystem mit einem Sender beschrieben, welcher im Zusammenhang mit einem Ereignis oder einem Objekt ein Signal sendet. Das Signal ist dafür vorgesehen, einen Detektor auszulösen, wobei der Detektor so eingestellt ist, dass er das Signal, welches von dem Sender ausgesandt wird, lediglich dann detektiert, wenn der Detektor innerhalb einer vorgegebenen Distanz vom Sender angeordnet ist. In Antwort auf seine Auslösung aktiviert der Detektor einen Alarm, wodurch eine frühe und klare Warnung an Menschen ausgegeben wird, die sich im Umkreis des Detektors befinden.

Die US 2004/0227656 A1 betrifft ein Fernsteuerungssystem für eine präzise Bestimmung des Abstandes zwischen einem Fahrzeug und einem Zugangsschlüssel. Das System weist einen Sender auf, welcher verschiedene Antwortanforderungssignale innerhalb eines vorgegebenen Kommunikationsbereichs außerhalb des Fahrzeugs aussendet. Ferner ist am Fahrzeug ein Empfänger zum Empfang eines Antwortsignals vorgesehen, welches von einem tragbaren Sendeempfänger in Antwort auf den Empfang des Anforderungssignals ausgesandt wird. Das Verschließen und das Aufschließen der Türen des Fahrzeugs wird auf der Basis dessen kontrolliert, ob der Empfänger ein Antwortsignal auf ein Anforderungssignal empfängt, welches nicht dasjenige ist, welches den größten Kommunikationsbereich aufweist.

In der US 2004/0178883 A1 ist ein ähnliches System beschrieben. Hierbei wird aufgrund einer Laufzeitmessung der Abstand zwischen einem Schlüssel und einem Auto bestimmt. Augrund der Problematik von ungenauen Abstandsmessungen neigt dieses System zu Fehlern. Aus diesem Grund ist vorgeschlagen, entsprechende statistische Methoden vorzusehen, um die Ergebnisse der Messung zu verifizieren.

**Aufgabe** der Erfindung ist es, ein System anzugeben, das das von einer Maschine ausgehende Gefahrenpotential bei hoher Sicherheit und Zuverlässigkeit verringert.

Die Aufgabe wird mit einem System zum Überwachen eines Gefahrenbereichs einer Maschine mit den Merkmalen des Anspruchs 1 gelöst. Bevorzugte Ausführungsbeispiele sind in den abhängigen Ansprüchen angegeben.

Das erfindungsgemäße System ist dadurch gekennzeichnet, dass die Basiseinheit zum Erzeugen zumindest eines zweiten Feldes um die Basiseinheit ausgebildet ist, wobei das zweite Feld vom ersten Feld verschieden ist und ein Nahfeld ist, dass die Transpondereinheit dafür eingerichtet ist, die Beschaffenheit des Transpondersignals zu ändern, wenn sie das zweite Feld empfängt, und dass die Basiseinheit dafür eingerichtet ist, ein geändertes Alarmsignal auszugeben, wenn sich die Beschaffenheit des empfangenen Transpondersignals ändert.

Erfindungsgemäß vorgesehen ist ein System zum Überwachen eines Gefahrenbereichs einer Maschine, insbesondere eines Fahrzeugs, bevorzugt einer landwirtschaftlichen Maschine, mit einer Transpondereinheit, die zum Erzeugen eines Transpondersignals bei Empfang eines ersten Feldes eingerichtet ist, und einer Basiseinheit, die zum Erzeugen des ersten Feldes um die Basiseinheit und zum Erzeugen eines Alarmsignals bei Empfang des Transpondersignals von der Transpondereinheit eingerichtet ist.

Ein Grundgedanke der Erfindung kann darin gesehen werden, eine Basiseinheit und eine Transpondereinheit vorzusehen, die beim Eintritt der Transpondereinheit in den Gefahrenbereich derart miteinander wechselwirken, dass die Basiseinheit ein Alarmsignal erzeugt. Sobald das Alarmsignal erzeugt wird, kann die Maschine automatisch oder manuell stillgelegt und/oder in einen sicheren Zustand gebracht werden. Insbesondere kann ein Fahrzeugführer sein Fahrzeug abbremsen oder gar nicht erst in Bewegung versetzen, wenn das Alarmsignal vorliegt. In jedem Fall wird er auf die Präsenz gefährdeter Objekte hingewiesen und kann entsprechend seine Aufmerksamkeit auf diese Objekte richten.

Nach der Erfindung ist die Basiseinheit geeigneterweise an der Maschine angeordnet. Die Basiseinheit erzeugt ein erstes Feld um die Basiseinheit und die Maschine herum. Gelangt die Transpondereinheit, die geeigneterweise an einem gefährdeten Objekt angeordnet ist, in die Nähe der Basiseinheit und empfängt die Transpondereinheit das Feld der Basiseinheit, so sendet die Transpondereinheit ihrerseits ein Transpondersignal aus. Wird dieses Transpondersignal wiederum von der Basiseinheit empfangen, so erzeugt diese das Alarmsignal.

Der Ansprechbereich des Systems kann somit durch die Reichweite des ersten Feldes bestimmt werden. Um einen zuverlässigen Betrieb zu gewährleisten, ist die Reichweite des Transpondersignals geeigneterweise größer als die Reichweite des ersten Feldes.

Erfindungsgemäß sendet die Transpondereinheit nur dann, wenn sie sich in der Feldreichweite der Basiseinheit, also im Gefahrenbereich der Maschine, befindet. Ansonsten wird die Transpondereinheit, vorzugsweise zyklisch, auf Empfang geschaltet. Hierdurch sind die Energieaufnahme der Transpondereinheit und die Umgebungsbelastung durch das Transpondersignal gering. Insbesondere wird das Transpondersignal nur dann in Kauf genommen, wenn sich die Transpondereinheit im Gefahrenbereich befindet, also akute Gefahr droht.

Geeigneterweise sind das Transpondersignal, das erste Feld und gegebenenfalls zusätzlich vorhandene Felder ein elektromagnetisches Signal bzw. Feld, insbesondere im Radiofrequenzbereich. Das Alarmsignal kann ein optisches und/oder akustisches Signal sein. Es kann auch ein elektrisches und/oder elektromagnetisches Signal sein, das beispielsweise einer Steuerung der Maschine zugeführt wird. Zum Erzeugen des Alarmsignals können beispielsweise eine Schallerzeugungseinrichtung und/oder eine Lichtquelle, beispielsweise zumindest eine Leuchtdiode, vorgesehen sein.

Erfindungsgemäß ist es, dass die Basiseinheit an der Maschine und die Transpondereinheit an dem gefährdeten Objekt, insbesondere an der gefährdeten Person, angeordnet ist. Die Transpondereinheit kann aber beispielsweise auch an einem gefährdeten Tier und/oder an einem gefährdeten Gegenstand angebracht sein. Bei der Maschine kann es sich insbesondere auch um eine Zugmaschine, beispielsweise um einen Traktor mit oder ohne Hänger, handeln. Grundsätzlich kann die Maschine mobil oder stationär sein.

Das Gefährdungspotential wird erfindungsgemäß dadurch weiter verringert, dass die Basiseinheit zum Erzeugen zumindest eines zweiten Feldes um die Basiseinheit ausgebildet ist, dass die Transpondereinheit dafür eingerichtet ist, die Beschaffenheit des Transpondersignals zu ändern, wenn sie das zweite Feld empfängt, und dass die Basiseinheit dafür eingerichtet ist, ein geändertes Alarmsignal auszugeben, wenn sich die Beschaffenheit des empfangenen Transpondersignals ändert. Gemäß diesem Erfindungsaspekt sind mehrere Felder vorgesehen, die unterschiedliche Reichweiten haben. Somit kann von der Transpondereinheit beurteilt werden, in welchem Abstand sich diese von der Basiseinheit befindet. Insbesondere kann bestimmt werden, ob sich die Transpondereinheit, insbesondere die gefährdete Person, im mittelbaren Gefahrenbereich befindet, in dem eine Gefährdung durch geeignete Bedienung der Maschine, beispielsweise durch Ausweichen mit dem Fahrzeug, abgewendet werden kann, oder im unmittelbaren Gefahrenbereich, in dem die Maschine sofort stillzusetzen ist.

Je nachdem, welches und/oder wie viele Felder empfangen werden, verändert die Transpondereinheit das von ihr abgestrahlte Transpondersignal. Beispielsweise kann die Trägerfrequenz des Transpondersignals verändert werden. Vorteilhafterweise wird jedoch beim Empfang des zweiten und/oder weiteren Feldes eine entsprechende Information auf das Transpondersignal aufmoduliert und in der Basiseinheit wieder demoduliert. In diesem Fall wird mittels des Transpondersignals der Zustand eines Detektors für das zweite oder weitere Feld mit übertragen. Zur Änderung des Alarmsignals beim Empfang des zweiten oder weiteren Feldes kann beispielsweise die Lautstärke des akustischen Alarmsignals erhöht oder dessen Tonfrequenz geändert werden und/oder die Helligkeit oder Wiederholfrequenz eines optischen Alarmsignals erhöht werden.

Die verschiedenen Felder können sich beispielsweise in ihrer Frequenz unterscheiden. Erfindungsgemäß handelt es sich bei dem zweiten Feld um ein elektrisches Nahfeld. Auch das weitere Feld kann ein elektrisches Nahfeld sein. Es ist bekannt, dass elektrische Energie im Wesentlichen abstrahlungsfrei in einem insbesondere quasistationären elektrischen Nahfeld gespeichert werden kann. Im Gegensatz zu einem Fernfeld, das mit 1/r abklingt, klingt ein solches Nahfeld geeigneterweise mit 1/r² oder höheren Potenzen ab, so dass die Nahfeldreichweite in der Regel geringer als die Fernfeldreichweite ist. Ein erfindungsgemäßes elektrisches Nahfeld hat den Vorteil, dass Energieverluste vergleichen mit einem Fernfeld gering sind, da sich ein Nahfeld nicht ablöst. Hierdurch kann ein besonders effizientes System erhalten werden. Bei dem Nahfeld kann es sich insbesondere um ein E-Feld handeln, das kapazitiv ein- und ausgekoppelt wird.

Sofern erfindungsgemäß ein Nahfeld verwendet wird, erfolgt die Kopplung zwischen Transpondereinheit und Basiseinheit geeigneterweise kapazitiv, zusätzlich oder alternativ aber auch induktiv. Vorzugsweise ist zumindest eines der Felder, insbesondere das Nahfeld und/oder das erste Feld, getaktet oder moduliert. Das erste Feld ist erfindungsgemäß ein Fernfeld. Vorzugsweise sind die Fernfeldanteiie im ersten Feld höher als im zweiten Feld und/oder ist die Reichweite des ersten Feldes höher als die Reichweite des zweiten Feldes.

Das zweite Feld ist als Nahfeld ausgebildet. Es ist vorteilhaft, dass die Transpondereinheit zum Empfangen des zweiten Feldes einen Nahfeldempfänger aufweist und/oder dass die Basiseinheit zum Erzeugen des zweiten Feldes einen Nahfelderzeuger aufweist. Der Nahfelderzeuger ist geeigneterweise antennenlos ausgebildet und weist insbesondere eine nicht resonante Elektrodenstruktur zur Feldauskopplung auf.

Das Nahfeld wird geeigneterweise in elektrisch leitende Teile der Maschine eingekoppelt, so dass das Feld die Maschine über das Streufeld der elektrisch leitenden Teile wie eine "Aura" umgibt und von der Transpondereinheit ausgekoppelt werden kann. Vorzugsweise kann die Signalreichweite des zweiten Feldes einige Meter, beispielsweise etwa 2,5 m, betragen. Die Reichweite des ersten Feldes kann einige zehn Meter, beispielsweise etwa 25 m betragen.

Erfindungsgemäß ist es, dass die Transpondereinheit zum Empfangen des ersten Feldes einen Empfänger aufweist. Zur weiteren Verringerung des Energiebedarfs der Transpondereinheit ist es vorteilhaft, dass die Transpondereinheit für eine zyklische Aktivierung des Empfängers ausgebildet ist. In diesem Fall wird der Empfänger also nicht kontinuierlich betrieben, sondern nach vorher bestimmten Zeitabschnitten aktiviert, und befindet sich zwischenzeitlich in einem Ruhezustand. Die Zykluszeit, d.h. die Zeit, die zwischen zwei aufeinander folgenden Aktivierungsvorgängen verstreicht, liegt vorzugsweise im Bereich von etwa 1 Sekunde. Die zyklische Empfangszeit, also die Zeit, während der der Empfänger nach Aktivierung in Betrieb ist, liegt vorzugsweise im Bereich von Millisekunden. Die Zykluszeit und/oder die zyklische Empfangszeit können variabel sein. Insbesondere kann die Zykluszeit bei zunehmender Betriebsgeschwindigkeit der Maschine, beispielsweise bei zunehmender Fahrtgeschwindigkeit des Fahrzeuges, oder bei detektiertem zweitem Feld, das heißt Nahfeld, reduziert werden. Hierdurch kann die Zuverlässigkeit des Systems erhöht werden.

Alternativ oder zusätzlich zum Empfänger für das erste Feld kann der Empfänger für das zweite Feld für eine zyklische Aktivierung durch die Transpondereinheit vorgesehen sein. Hierdurch kann der Energiebedarf weiter gesenkt werden. Die zyklische Aktivierung kann wie im Zusammenhang mit dem Empfänger für das erste Feld beschrieben erfolgen. Vorzugsweise ist die Transpondereinheit so ausgebildet, dass der Empfänger für das zweite Feld nur dann aktiviert, insbesondere zyklisch aktiviert wird, wenn die Transpondereinheit das erste Feld empfängt. Auch dies trägt zur Senkung des Energiebedarfs bei. Alternativ kann die Detektion des zweiten Feldes eine Meldung an die Basisstation auch zwischen den Aufweckphasen bzw. Aktivierungsphasen, insbesondere des Empfängers für das erste Feld, erfolgen. Dies reduziert die Reaktionszeit.

Die Betriebssicherheit kann dadurch erhöht werden, dass das erste Feld kontinuierlich erzeugt wird. Da die Basiseinheit, welche dieses Feld erzeugt, in der Regel an der Maschine angeordnet ist, ist hier der mit einem kontinuierlichen Betrieb einhergehende Energieverbrauch in der Regel allenfalls von geringer Relevanz. Eine Verringerung der Feldbelastung an der Basiseinheit und/oder an der Maschine kann hier beispielsweise durch das Führerhaus erfolgen, das einen Faraday'schen Käfig bildet. Die Antenne kann dabei auf dem Dach angeordnet sein.

Für eine besonders kompakte Bauform ist es vorteilhaft, dass die Transpondereinheit, insbesondere zum Empfangen des ersten Feldes und zum Erzeugen des Transpondersignals, einen Transceiver, bevorzugt einen Low Power Radio Transceiver, aufweist und/oder dass die Basiseinheit, insbesondere zum Erzeugen des ersten Feldes und zum Empfangen des Transpondersignals, einen Transceiver, bevorzugt einen Low Power Radio Transceiver, aufweist. Die Frequenz des Transpondersignals kann mit der Frequenz eines der Felder identisch sein. Geeigneterweise sind jedoch die Frequenzen verschieden.

Die Einrichtung zum Erzeugen des ersten Feldes, insbesondere ein hierfür vorgesehener Transceiver, weist für die Fernfelderzeugung vorzugsweise eine Antenne auf.

Das von der Basiseinheit erzeugte zumindest eine Feld weist vorzugsweise jeweils eine einzige Feldfrequenz auf. Das Feld kann aber auch mehrere Feldfrequenzen aufweisen. Besonders bevorzugt ist es, dass die Frequenz des ersten Feldes und/oder des zweiten Feldes im Bereich von 13,56 MHz, 433 MHz, 868 MHz und/oder 2480 MHz liegt. Messungen haben ergeben, dass mit einer derartigen Sendefrequenz praktisch der ganze relevante Bereich um die Maschine, insbesondere auch der Bereich unterhalb eines Fahrzeuges, abgedeckt werden kann.

Um mehrere bewegliche Objekte im Gefahrenbereich überwachen zu können, ist es erfindungsgemäß vorteilhaft, dass mehrere Transpondereinheiten vorgesehen sind. Vorzugsweise ist an jedem zu überwachenden Objekt mindestens eine Transpondereinheit vorgesehen.

Um eine Unterscheidung der einzelnen Transpondereinheiten, also der einzelnen Objekte, an der Basisstation zu ermöglichen, ist es ferner vorteilhaft, dass die Transpondereinheiten jeweils unterschiedliche Transpondersignale erzeugen. Beispielsweise können die Signalfrequenzen unterschiedlich sein, oder die Transpondersignale der verschiedenen Transpondereinheiten können jeweils mit einem unterschiedlichen Identifikationscode versehen sein.

Für einen besonders geringen apparativen Aufwand und niedrige Gerätekosten ist es vorteilhaft, dass die Transpondersignale der Transpondereinheiten dieselbe Sendefrequenz aufweisen. Um bei einer einzigen Sendefrequenz Interferenzen zu reduzieren, ist es vorteilhaft, dass die Transpondereinheiten und/oder die Basiseinheit für ein Zeitmultiplexverfahren zur Transpondersignalübertragung eingerichtet sind. Beispielsweise können die Transpondereinheiten die jeweiligen Transpondersignale diskontinuierlich aussenden, wobei die Sendeintervalle der einzelnen Transpondereinheiten unterschiedlich gewählt werden. Es kann auch vorgesehen sein, die Sendeintervalle der verschiedenen Transpondereinheiten nach jeder Aussendung, beispielsweise auf Grundlage von Zufallszahlen und/oder der Identifikationsnummer, zu ändern.

Das Gefahrenpotential kann weiter dadurch verringert werden, dass die Basiseinheit eine Anzeige, insbesondere eine Leuchtdiodenanzeige, zum Anzeigen der Zahl der empfangenen Transpondersignale aufweist. Auch ein Display mit numerischer oder/und alphanumerischer Anzeige und/oder ein Grafikdisplay kann vorgesehen sein.

Um die verschiedenen Transpondereinheiten an der Basiseinheit unterscheiden zu können, ist es vorteilhaft, dass die zumindest eine Transpondereinheit dafür ausgebildet ist, dem jeweiligen Transpondersignal einen Identifikationscode aufzumodulieren, und dass die Basiseinheit dafür ausgebildet ist, den Identifikationscode zu demodulieren. Der Code, bei dem es sich vorteilhafterweise um eine Nummer handelt, ist geeigneterweise bei jeder Transpondereinheit ein anderer. Insbesondere kann vorgesehen sein, dass es weltweit für jede Transpondereinheit einen unverwechselbaren, einzigartigen Identifikationscode gibt.

Insbesondere um zu gewährleisten, dass nur gefährdete und/oder schutzlose Objekte einen Alarm auslösen, ist die Basiseinheit vorzugsweise dafür eingerichtet, das empfangene Transpondersignal einer Transpondereinheit bei der Erzeugung des Alarmsignals nur dann zu berücksichtigen, wenn der demodulierte Identifikationscode des Transpondersignals mit zumindest einem in der Basiseinheit gespeicherten Identifikationscode übereinstimmt. Gemäß dieser Ausführungsform wird nur dann Alarm ausgelöst, wenn der Identifikationscode der in den Gefahrenbereich, d.h. die Feldreichweite, eintretenden Transpondereinheit in der Basiseinheit als "gefährdet" gespeichert ist. Autorisierte Träger von Transpondereinheiten lösen hingegen keinen Alarm aus. Hierzu können in der Basiseinheit ein oder mehrere Identifikationscodes oder auch ganze Codebereiche gespeichert sein.

Beim Betrieb des erfindungsgemäßen Systems kann es vorkommen, dass sich gefährdete Personen berechtigterweise im Gefahrenbereich der Maschine aufhalten. Dies kann beispielsweise dann der Fall sein, wenn Kinder in Kenntnis des Fahrers auf einem Traktor mitfahren. In diesem Fall würde über die entsprechende Transpondereinheit des Kindes ständig ein unerwünschter Alarm generiert. Um dies zu verhindern, kann die Basiseinheit mit einer Quittierungsfunktion versehen werden.

Insbesondere kann die Basiseinheit dafür eingerichtet sein, den Identifikationscode zumindest eines empfangenen Transpondersignals beim Vorliegen eines Quittierungssignals in einem Quittierungsspeicher zu speichern und anschließend das Transpondersignal mit dem im Quittierungsspeicher gespeicherten Identifikationscode bei der Erzeugung des Alarmsignals zumindest zeitweise unberücksichtigt zu lassen. Quittiert somit beispielsweise der Traktorfahrer den Alarm und erzeugt ein Quittierungssignal, so wird die Identifikationsnummer des mitfahrenden Kindes gespeichert und das durch das Kind ausgelöste Alarmsignal unterdrückt. Es kann auch eine eingeschränkte Quittierungsfunktion vorgesehen sein, bei der die Transpondereinheit mit dem in der Basiseinheit gespeicherten Identifikationscode so lange keinen Alarm auslöst, also das entsprechende Transpondersignal unberücksichtigt bleibt, bis der Transponder in den Bereich des kurzreichweitigen zweiten oder gegebenenfalls eines weiteren Feldes gelangt ist.

Zum Erzeugen des Quittierungssignals kann beispielsweise ein Quittierungsschalter an der Basiseinheit vorgesehen werden. Die Basiseinheit kann auch mehrere Identifikationscodes speichern, so dass die Transpondersignale mehrerer Transpondereinheiten unberücksichtigt bleiben können, d.h. mehrere Transpondereinheiten quittiert werden können.

Zur weiteren Erhöhung der Betriebssicherheit ist es vorteilhaft, dass die Basiseinheit dafür eingerichtet ist, das Transpondersignal mit dem im Quittierungsspeicher gespeicherten Identifikationscode bei der Erzeugung des Alarmsignals wieder zu berücksichtigen, nachdem der Empfang des Transpondersignals mit dem im Quittierungsspeicher gespeicherten Identifikationscode unterbrochen war. Gelangt somit die Transpondereinheit aus der Reichweite der Basiseinheit, d.h. aus dem Gefahrenbereich hinaus, so wird die Quittierung aufgehoben und die Transpondereinheit erzeugt beim Wiedereintritt in den Gefahrenbereich erneut ein Alarmsignal. Um beispielsweise zu verhindern, dass kurzfristige Reichweitefluktuationen des zumindest einen Feldes eine unerwünschte Aufhebung der Quittierung verursachen, kann vorgesehen sein, das Transpondersignal mit dem im Quittierungsspeicher gespeicherten Identifikationscode erst dann wieder zu berücksichtigen, wenn der Empfang des Transpondersignals für eine vorher bestimmte Zeit, beispielsweise eine Sekunde, unterbrochen war.

Für einen autarken Betrieb ist es vorteilhaft, dass die Transpondereinheit eine Stromquelle, insbesondere eine Batterie, aufweist. Die Batterie ist vorzugsweise wiederaufladbar als Akkumulator ausgebildet und hat für eine kompakte Bauform der Transpondereinheit bevorzugt die Form einer Knopfzelle. Selbstverständlich können auch mehrere Batterien an der Transpondereinheit vorgesehen sein.

Die Batterie der Transpondereinheit kann auswechselbar und/oder wiederaufladbar vorgesehen sein. Sie kann aber auch fest und nicht wiederaufladbar an der Transpondereinheit angeordnet sein, wobei die Transpondereinheit in diesem Fall als Verbrauchsgegenstand ausgebildet sein kann, der entsorgt wird, wenn die Batterie entladen ist. Hierdurch wird die Zuverlässigkeit erhöht.

Ferner ist es vorteilhaft, dass die Transpondereinheit zumindest eine Stromerzeugungseinrichtung, beispielsweise eine Solarzelle und/oder ein Piezoelement, insbesondere zum Aufladen der Batterie, aufweist. Das Piezoelement kann beispielsweise in der Schuhsohle eines Trägers der Transpondereinheit angeordnet werden, so dass es beim Gehen des Trägers Strom erzeugt.

Die Betriebssicherheit des Systems kann weiter dadurch erhöht werden, dass die Transpondereinheit dafür ausgebildet ist, dem Transpondersignal Zustandsdaten der Stromquelle aufzumodulieren, und dass die Basiseinheit dafür ausgebildet ist, die Zustandsdaten aus dem empfangenen Transpondersignal zu demodulieren und insbesondere anzuzeigen. Bei den Zustandsdaten kann es sich beispielsweise um den Ladezustand der Batterie handeln. Die Basiseinheit kann beispielsweise so ausgebildet sein, dass sie einen Alarm ausgibt, wenn der Ladezustand unter einen vorgegebenen Wert abfällt. Das Datenprotokoll der zu übertragenden Identifikationscodes und/oder der Zustandsdaten ist vorteilhafterweise möglichst kurz.

Vorzugsweise ist die Transpondereinheit tragbar und insbesondere an einem Kleidungsstück, an einem Accessoire und/oder an einem Gebrauchsgegenstand angeordnet, bevorzugt eingearbeitet. Insbesondere kann die Transpondereinheit an einem Anhänger, einem Amulett, einer Uhr, einer Kette oder einem Fußband vorgesehen sein. Sie kann auch in Kleidungsstücken, wie beispielsweise einer Mütze oder einer Jacke, integriert sein oder in Gebrauchsgegenständen, wie beispielsweise einer Schultasche, einer Geldbörse, einem Anstecker oder Ähnlichem, integriert und/oder hieran angebracht sein.

Vorzugsweise wird ein erfindungsgemäßes System zum Nachweis von Personen im Gefahrenbereich einer Maschine, insbesondere eines Fahrzeuges, verwendet.

Nach der Erfindung kann die Mehrzahl der aktiven Teile mit der Basiseinheit an der Maschine vorgesehen werden. Dies ist vorteilhaft, da an der Maschine häufig ausreichend Energie zum Betrieb der aktiven Teile zur Verfügung steht, da die aktiven Teile in der Regel einfach in die Maschine integriert werden können und da in der Maschine die elektromagnetischen Felder in der Regel nicht störend sind und/oder vergleichsweise leicht abgeschirmt werden können, beispielsweise durch den Faraday'schen Käfig einer Fahrerkabine. Auch ist das System vergleichsweise kostengünstig, da bei einer Vielzahl von zu überwachenden Personen die vergleichsweise teuren, aktiven Komponenten nur in einfacher Ausführung an der Basisstation benötigt werden.

Die Erfindung wird nachfolgend anhand bevorzugter Ausführungsbeispiele näher erläutert, die schematisch in den Figuren dargestellt sind. In den Figuren zeigen schematisch:
- Fig. 1: eine Transpondereinheit;
- Fig. 2: eine Basiseinheit;
- Fig. 3: die Feldausdehnung um eine Maschine mit einer Basiseinheit; und
- Fig. 4: eine alternative Ausführungsform einer Basiseinheit.

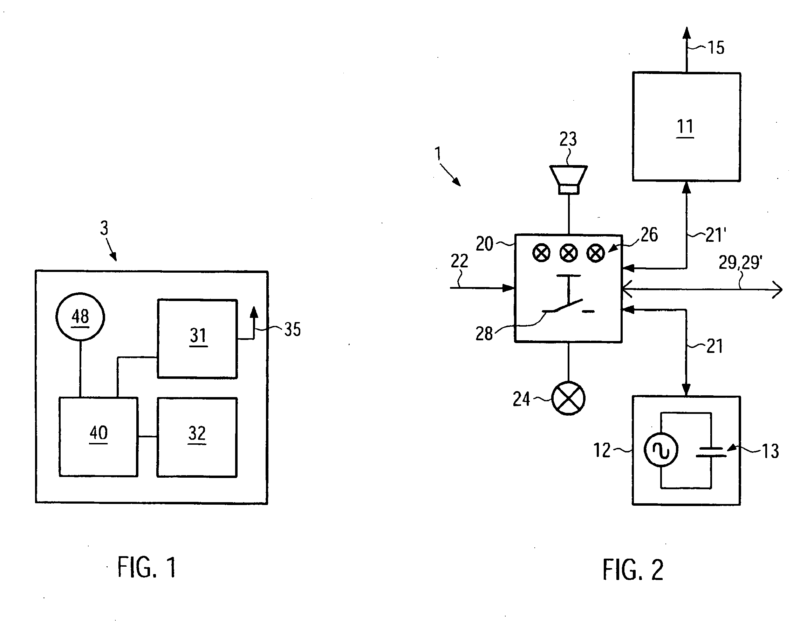

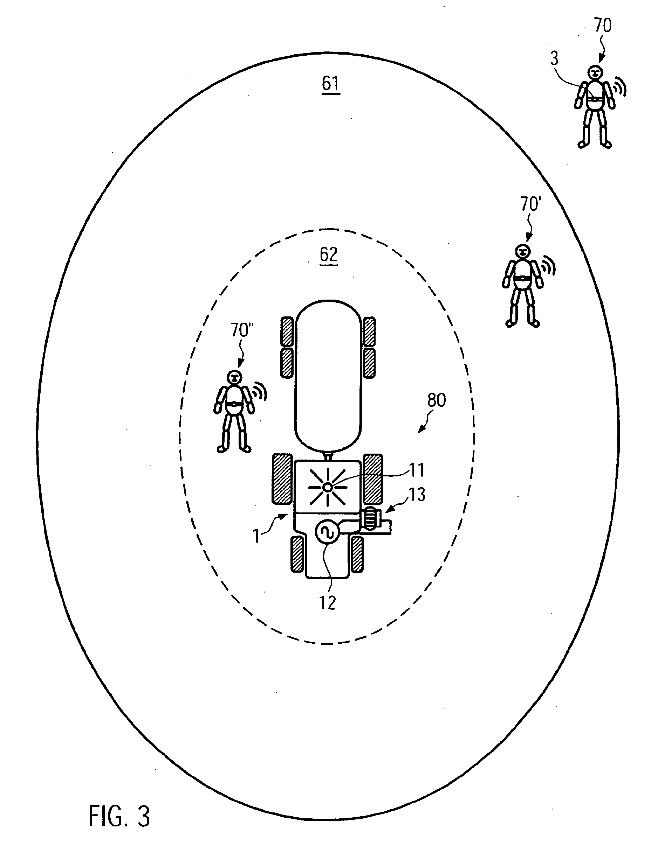

Ein Beispiel einer Transpondereinheit 3 eines erfindungsgemä-βen Systems ist in Figur 1 dargestellt. Die Transpondereinheit 3 weist einen als Low-Power-Radio-Transceiver (SendeEmpfänger) ausgebildeten Transceiver 31 auf, an dem eine Antenne 35 angeordnet ist. Dieser Transceiver 31 dient dem Empfang eines in Figur 3 dargestellten Fernfeldes 61, das von einer Basiseinheit 1 ausgesendet wird. Der Transceiver 31 dient darüber hinaus zum Erzeugen eines Transpondersignals, das von der Antenne 35 an die Basiseinheit 1 abgestrahlt wird.

An der Transpondereinheit 3 ist darüber hinaus ein als Nahfeldempfänger 32 ausgebildeter Empfänger zum Empfangen des in Figur 3 dargestellten zweiten Feldes 62 der Basiseinheit 1 vorgesehen, das als Nahfeld ausgebildet ist.

Zur Steuerung der Transpondereinheit 3 ist ein Microcontroller 40 vorgesehen, der mit dem Transceiver 31 und dem Nahfeldempfänger 32 in Signalverbindung steht. Außerdem ist eine Batterie 48 zur Stromversorgung des Transceivers 31, Nahfeldempfängers 32 und des Microcontrollers 40 vorgesehen.

Die Basiseinheit 1 ist in Figur 2 dargestellt. Zum Erzeugen des ersten Feldes 61 weist die Basiseinheit einen als Low-Power-Radio-Transceiver ausgebildeten Transceiver 11 auf, an dem einen Antenne 15 vorgesehen ist. Der Transceiver 11 dient darüber hinaus zum Empfangen des Transpondersignals von der Transpondereinheit 3. Ferner ist an der Basiseinheit 1 ein Nahfelderzeuger 12 mit Koppelflächen 13 zum Erzeugen des zweiten Feldes 62 und zur kapazitiven Kopplung mit dem Nahfeldempfänger 32 der Transpondereinheit 3 vorgesehen. Der Transceiver 11 kann auch in einen Empfänger und in einen Sender aufgeteilt sein. Dies kann vorteilhaft sein, da auf einem Band kontinuierlich gesendet werden kann und auf einem anderen Band zyklisch ankommende Meldungen empfangen werden können. Insbesondere können der oder die erfindungsgemäßen Transceiver 31 und/oder 11 für einen Frequenzduplexbetrieb, grundsätzlich aber auch für einen Halbduplexbetrieb eingerichtet sein.

Die Basiseinheit 1 weist ferner eine Alarmeinheit 20 auf, über welche der Transceiver 11 und der Nahfelderzeuger 12 miteinander vernetzt sind und mit Strom versorgt werden. Hierzu sind Leitungen 21, 21' vorgesehen. An der Alarmeinheit 20 sind ein Horn 23 sowie eine Warnleuchte 24 angeordnet, die ein akustisches bzw. ein optisches Warnsignal ausgeben, wenn eine Transpondereinheit 3 in den Bereich des ersten Feldes 61 oder des zweiten Feldes 62 der Basiseinheit gelangt.

An der Basiseinheit 1 ist ferner eine Leuchtanzeige 26 zur Anzeige der Zahl der nachgewiesenen Transpondereinheiten 3 vorgesehen. Ferner ist eine Quittierungstaste 28 vorgesehen, mit welcher der Alarm vorübergehend deaktiviert werden kann. Zur elektrischen Versorgung der Basiseinheit 1 ist an der Alarmeinheit 20 eine Versorgungsleitung 22 vorgesehen. Zusätzlich ist eine BUS-Schnittstelle 29 oder/und eine Alarmleitung 29' zur Fahrzeugelektronik vorgesehen. Die hierüber übertragene Information kann verschiedene Fahrzeugaktivitäten, wie Hupen oder Bremsen, insbesondere automatisch, auslösen.

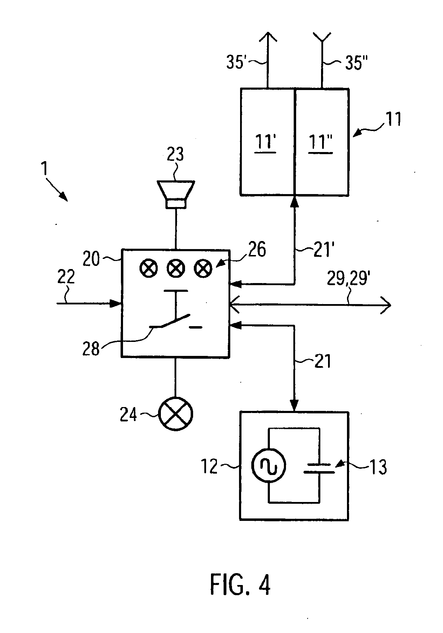

Ein Ausführungsbeispiel einer alternativ ausgebildeten Basiseinheit 1 ist in Fig. 4 dargestellt. Die Basiseinheit der Fig. 4 unterscheidet sich von der Basiseinheit der Fig. 2 lediglich dadurch, dass zum Aussenden des ersten Feldes 61 bzw. zum Empfangen des Transpondersignals ein separater Sender 11' bzw. ein separater Empfänger 11" vorgesehen sind, wobei der Sender 11' eine eigene Sendeantenne 35' und der Empfänger 11" eine eigene Empfangsantenne 35" aufweist. Gemäß dem Ausführungsbeispiel der Fig. 4 ist der Transceiver 11 für einen Vollduplexbetrieb ausgebildet.

Die Vorrichtung kann wie folgt betrieben werden:
Die Basiseinheit 1 erzeugt mittels des Transceivers 11 das erste Feld 61 und mittels des Nahfelderzeugers 12 das zweite Feld 62, wobei die Reichweite des Feldes 61 größer ist als die Reichweite des Feldes 62. Gelangt die Transpondereinheit 3 in den Bereich des ersten Feldes 61, so wird dieses vom Transceiver 31 nachgewiesen. In diesem Fall veranlasst der Microcontroller 40, dass der Transceiver 31 ein Transpondersignal aussendet. Diesem Transpondersignal ist ein Identifikationscode der Transpondereinheit 3 aufgeprägt.

Gelangt die Transpondereinheit 3 in den Empfangsbereich des zweiten Feldes 62, so wird dieses Feld mittels des Nahfeldempfängers 32 nachgewiesen. Dies entspricht dem Eintritt der Transpondereinheit 3 in den unmittelbaren Gefährdungsbereich um die Basiseinheit 1. Neben dem Identifikationscode werden dem vom Transceiver 31 ausgesendeten Transpondersignal auch Informationen darüber aufgeprägt, ob sich die Transpondereinheit 3 im Bereich des zweiten Feldes 62 befindet.

Empfängt der Transceiver 11 der Basiseinheit 1 das Transpondersignal der Transpondereinheit 3, erhält also die Basiseinheit 1 die Information, dass sich ein mit der Transpondereinheit 3 versehenes Objekt im Gefährdungsbereich befindet, so wird diese Information an die Alarmeinheit 20 gemeldet. Diese vergleicht, ob der im Transpondersignal enthaltene Identifikationscode als "gefährdet" gespeichert ist. Wird dies bejaht, so gibt die Alarmeinheit 20 über das Horn 23 und die Warnleuchte 24 ein Alarmsignal aus.

Darüber hinaus prüft die Alarmeinheit 20 auf Grundlage der in dem empfangenen Transpondersignal enthaltenen Information das Gefährdungspotential, also ob sich die Transpondereinheit 3 im ersten Feld 61 oder im zweiten Feld 62 aufhält. Erhöht sich das Gefährdungspotential, d.h. gelangt die Transpondereinheit 3 vom ersten Feld 61 in das zweite Feld 62, so wird das Alarmsignal verstärkt. Hierbei kann beispielsweise die Lautstärke des akustischen Warnsignals des Horns 23 und/oder die Häufigkeit des Alarmsignals erhöht werden.

Anhand des im jeweiligen Transpondersignal enthaltenen Identifikationscodes ermittelt die Alarmeinheit 20 darüber hinaus, wie viele Transpondereinheiten 3 sich im Bereich des ersten Feldes 61 und/oder des zweiten Feldes 62, also im Gefährdungsbereich, befinden. Die zahl der Transpondereinheiten wird durch die Leuchtanzeige 26 dargestellt, die beispielsweise fünf Leuchtdioden aufweisen kann. Die Zahl der leuchtenden Leuchtdioden kann dabei die Zahl der Transpondereinheiten 3 angeben. Befinden sich mehr als fünf als gefährdet klassifizierte Transpondereinheiten 3 im Detektionsbereich, so kann die letzte LED leuchten.

Die Quittierungstaste 28 ermöglicht ein Quittieren, also ein vorübergehendes Deaktivieren des Alarmsignals. Wird diese Taste betätigt, so wird der gerade empfangene Identifikationscode gespeichert und der Alarm abgeschaltet. Ein Alarm wird erst dann wieder ausgelöst, wenn die Transpondereinheit 3 mit dem fraglichen Identifikationscode das erste Feld 61 länger als eine vorbestimmte Zeit, beispielsweise länger als eine Sekunde, verlassen hat. Hierdurch kann beispielsweise eine Alarmauslösung verhindert werden, wenn Kinder mit Transpondereinheiten 3 gewollterweise im Traktor mitfahren.

Die Quittierungstaste 28 ermöglicht es, auch mehrere Transpondereinheiten 3 zu quittieren. In diesem Fall überwacht die Basiseinheit 1 immer noch, ob die Anzahl der quittierten Transpondereinheiten 3 mit der Zahl der im Bereich des ersten Feldes 61 und/oder des zweiten Feldes 62 befindlichen Transpondereinheiten 3 übereinstimmt. Ist dies nicht der Fall, wird erneut ein Alarm ausgelöst. Zu beachten ist in diesem Fall, dass die Identifikationscodes zum Identifizieren nicht bekannt sein müssen. Vielmehr kann die Alarmeinheit 20 so ausgebildet sein, dass pauschal alle empfangenen Transpondereinheiten 3 quittiert werden.

Verlässt eine quittierte Transpondereinheit 3 das erste Feld 61 und betritt es wieder, so wird erneut ein Alarm generiert. Die Quittierung wurde von der Alarmeinheit 20 vorher aufgehoben.

Figur 3 zeigt das gesamte System, wobei die Basiseinheit 1 auf einer als Traktor mit Hänger ausgebildeten Maschine 80 angeordnet ist. Bei der Maschine 80 könnte es sich grundsätzlich aber beispielsweise auch um einen Mähdrescher, einen Fertigungsautomaten, usw. handeln.

Der Transceiver 11 der Basiseinheit 1 ist kontinuierlich aktiv und erzeugt das Feld 61 mit einer Reichweite von beispielsweise 25 m. Ferner ist auch der Nahfelderzeuger 12 dauernd aktiv und erzeugt das zweite Feld 62. Das zweite Feld 62 hat dabei eine geringere Reichweite als das erste Feld 61. Beispielsweise kann die Reichweite des zweiten Feldes 62 ca. 2,5 m betragen.

In Figur 3 sind eine Vielzahl von Personen 70, 70', 70" gezeigt, die jeweils eine Transpondereinheit 3 am Gürtel tragen. Die Person 70 befindet sich dabei sowohl außerhalb des Empfangsbereiches des inneren, zweiten Feldes 62 als auch des äu-βeren, ersten Feldes 61. In diesem Fall hat das Empfangsteil des Transceivers 31 der Transpondereinheit 3, das zyklisch, d.h. periodisch, aktiviert wird, keinen Empfang. Demgemäß strahlt auch das Sendeteil des Transceivers 31 der Transpondereinheit 3 kein Signal aus. Insbesondere mittels des Microcontrollers 40 ist in diesem Fall auch der Nahfeldempfänger 32 für das zweite Feld 62, der ohnehin keinen Empfang hätte, deaktiviert.

Die Person 70' befindet sich im Empfangsbereich des ersten Feldes 61, aber außerhalb des Empfangsbereichs des zweiten Feldes 62. In diesem Fall empfängt das periodisch aktive Empfangsteil des Transceivers 31 der Transpondereinheit 3 das Fernfeld 61. Das Sendeteil des Transceivers 31 sendet nun, gesteuert vom Microcontroller 40, periodisch ein Transpondersignal mit den Identifikationscode der jeweiligen Transpondereinheit 3 aus. Über den Microcontroller 40 wird auch der Nahfeldempfänger 32 der Transpondereinheit 3 periodisch aktiviert, dieser hat jedoch keinen Empfang.

Die Person 70" befindet sich sowohl in Reichweite des ersten Feldes 61 als auch des zweiten Feldes 62, also im unmittelbaren Gefahrenbereich der Maschine 80. Auch in diesem Fall empfängt das periodisch aktivierte Empfangsteil des Transceivers 31 der Transpondereinheit 3 das erste Feld 61. Aufgrund dessen veranlasst der Microcontroller 40 das Sendeteil des Transceivers 31 der Transpondereinheit 3 dazu, periodisch ein Transpondersignal mit Identifikationscode auszusenden.

Darüber hinaus empfängt der Nahfeldempfänger 32 nun das zweite Feld 62. Der Microcontroller 40 veranlasst daraufhin das Sendeteil des Transceivers 31 dazu, neben dem Identifikationscode auch einen speziellen Nahfeldcode auszusenden, aufgrund dessen die Basiseinheit 1 erkennen kann, dass sich die Person 70" im Bereich des zweiten Feldes 62, also im unmittelbaren Gefährdungsbereich, befindet.

## Patentansprüche

1. System zum Überwachen eines Gefahrenbereichs einer Maschine (80), mit
- einer Transpondereinheit (3), die zum Erzeugen eines Transpondersignals bei Empfang eines ersten Feldes (61), welches ein Fernfeld ist, eingerichtet ist, und
- einer Basiseinheit (1), die zum Erzeugen des ersten Feldes (61) um die Basiseinheit (1) und zum Erzeugen eines Alarmsignals bei Empfang des Transpondersignals von der Transpondereinheit (3) eingerichtet ist,
**dadurch gekennzeichnet,**
- **dass** die Basiseinheit (1) zum Erzeugen zumindest eines zweiten Feldes (62) um die Basiseinheit ausgebildet ist,
- wobei das zweite Feld (62) vom ersten Feld (61) verschieden ist und ein Nahfeld ist,
- **dass** die Transpondereinheit (3) dafür eingerichtet ist, die Beschaffenheit des Transpondersignals zu ändern, wenn sie das zweite Feld (62) empfängt, und
- **dass** die Basiseinheit (1) dafür eingerichtet ist, ein geändertes Alarmsignal auszugeben, wenn sich die Beschaffenheit des empfangenen Transpondersignals ändert.

2. System nach Anspruch 1,
**dadurch gekennzeichnet,**
**dass** die Basiseinheit (1) an der Maschine (80) und die Transpondereinheit (3) an einem gefährdeten Objekt, insbesondere einer gefährdeten Person (70) angeordnet ist.

3. System nach einem der Ansprüche 1 oder 2,
**dadurch gekennzeichnet,**
**dass** die Transpondereinheit (3) zum Empfangen des zweiten Feldes (62) einen Nahfeldempfänger (32) aufweist und/oder dass die Basiseinheit (1) zum Erzeugen des zweiten Feldes (62) einen Nahfelderzeuger (12) aufweist.

4. System nach einem der Ansprüche 1 bis 3,
**dadurch gekennzeichnet,**
- **dass** die Transpondereinheit (3) zum Empfangen des ersten Feldes (61) einen Empfänger aufweist und
- **dass** die Transpondereinheit (3) für eine zyklische Aktivierung des Empfängers ausgebildet ist.

5. System nach einem der Ansprüche 1 bis 4,
**dadurch gekennzeichnet**,
das das erste Feld (61) kontinuierlich erzeugt wird.

6. System nach einem der Ansprüche 1 bis 5,
**dadurch gekennzeichnet,**
**dass** die Transpondereinheit (3), insbesondere zum Empfangen des ersten Feldes (61) und zum Erzeugen des Transpondersignals, einen Transceiver (31), bevorzugt einen Low Power Radio Transceiver, insbesondere mit einem separaten Sender und einen separaten Empfänger, aufweist und/oder dass die Basiseinheit (1), insbesondere zum Erzeugen des ersten Feldes (61) und zum Empfangen des Transpondersignals, einen Transceiver (11), bevorzugt einen Low Power Radio Transceiver, insbesondere mit einem separaten Sender und einen separaten Empfänger, aufweist.

7. System nach einem der Ansprüche 1 bis 6,
**dadurch gekennzeichnet,**
**dass** die Frequenz des ersten Feldes (61) im Bereich von 13,56 MHz, 433 MHz, 868 MHz und/oder 2480 MHz liegt, und/oder
**dass** die Frequenz des zweiten Feldes (62) zwischen 0,1 Hz und 2,5 GHz liegt.

8. System nach einem der Ansprüche 1 bis 7,
**dadurch gekennzeichnet,**
- **dass** mehrere Transpondereinheiten (3) vorgesehen sind, und
- **dass** die Transpondereinheiten (3) jeweils unterschiedliche Transpondersignale erzeugen.

9. System nach Anspruch 8,
**dadurch gekennzeichnet,**
**dass** die Transpondersignale der Transpondereinheiten (3) dieselbe Sendefrequenz aufweisen, und
**dass** die Transpondereinheiten (3) und/oder die Basiseinheit (1) bevorzugt für ein Zeitmultiplexverfahren zur Transpondersignalübertragung eingerichtet sind.

10. System nach einem der Ansprüche 8 oder 9,
**dadurch gekennzeichnet,**
**dass** die Basiseinheit (1) eine Anzeige (26), insbesondere eine Leuchtdioden-Anzeige, zum Anzeigen der Zahl der empfangenen Transpondersignale aufweist.

11. System nach einem der Ansprüche 1 bis 10,
**dadurch gekennzeichnet,**
**dass** die zumindest eine Transpondereinheit (3) dafür ausgebildet ist, dem jeweiligen Transpondersignal einen Identifikationscode aufzumodulieren, und
**dass** die Basiseinheit (1) dafür ausgebildet ist, den Identifikationscode zu demodulieren.

12. System nach Anspruch 11,
**dadurch gekennzeichnet,**
**dass** die Basiseinheit (1) dafür eingerichtet ist, das empfangene Transpondersignal einer Transpondereinheit (3) bei der Erzeugung des Alarmsignals nur dann zu berücksichtigen, wenn der demodulierte Identifikationscode des Transpondersignals mit zumindest einem in der Basiseinheit (1) gespeicherten Identifikationscode übereinstimmt.

13. System nach einem der Ansprüche 11 oder 12,
**dadurch gekennzeichnet,**
**dass** die Basiseinheit (1) dafür eingerichtet ist, den Identifikationscode zumindest eines empfangenen Transpondersignals beim Vorliegen eines Quittierungssignals in einem Quittierungsspeicher zu speichern und
anschließend das Transpondersignal mit dem im Quittierungsspeicher gespeicherten Identifikationscode bei der Erzeugung des Alarmsignals zumindest zeitweise unberücksichtigt zu lassen.

14. System nach Anspruch 13,
**dadurch gekennzeichnet,**
**dass** die Basiseinheit (1) dafür eingerichtet ist, das Transpondersignal mit dem im Quittierungsspeicher gespeicherten Identifikationscode bei der Erzeugung des Alarmsignals wieder zu berücksichtigen, nachdem der Empfang des Transpondersignal mit dem im Quittierungsspeicher gespeicherten Identifikationscode, insbesondere für eine vorher bestimmte Zeit, unterbrochen war.

15. System nach einem der Ansprüche 1 bis 19,
**dadurch gekennzeichnet,**
**dass** die Transpondereinheit (3) eine Stromquelle, insbesondere einen Batterie (48) aufweist.

16. System nach Anspruch 15,
**dadurch gekennzeichnet,**
**dass** die Transpondereinheit (3) zumindest eine Stromerzeugungseinrichtung, beispielsweise eine Solarzelle und/oder ein Piezoelement, insbesondere zum Aufladen der Batterie (48), aufweist.

17. System nach einem der Ansprüche 15 oder 16,
**dadurch gekennzeichnet,**
**dass** die Transpondereinheit (3) dafür ausgebildet ist, dem Transpondersignal Zustandsdaten der Stromquelle aufzumodulieren, und
**dass** die Basiseinheit (1) dafür ausgebildet ist, die Zustandsdaten aus dem empfangenen Transpondersignal zu demodulieren und insbesondere anzuzeigen.

18. System nach einem der Ansprüche 1 bis 17,
**dadurch gekennzeichnet,**
**dass** die Transpondereinheit (3) tragbar ist und insbesondere an einem Kleidungsstück, an einem Accessoire und/oder an einem Gebrauchsgegenstand angeordnet, bevorzugt eingearbeitet ist.

19. Verwendung eines Systems nach einem der Ansprüche 1 bis 18 zum Nachweis von Personen im Gefahrenbereich einer Maschine, insbesondere eines Fahrzeuges.

## Claims

1. System for monitoring a hazardous area of a machine (80), having
- a transponder unit (3) which is adapted to generate a transponder signal upon receipt of a first field (61) which is a far field, and
- a base unit (1) which is adapted to generate the first field (61) around the base unit (1) and to generate an alarm signal upon receipt of the transponder signal from the transponder unit (3),
**characterised in that**
- the base unit (1) is designed to generate at least one second field (62) around the base unit,
- wherein the second field (62) is different from the first field (61) and is a near field,
- the transponder unit (3) is adapted to change the composition of the transponder signal if it receives the second field (62), and
- the base unit (1) is adapted to output a modified alarm signal if the composition of the received transponder signal changes.

2. System according to claim 1,
**characterised in that**
the base unit (1) is disposed on the machine (80) and the transponder unit (3) on an object at risk, in particular on a person at risk (70).

3. System according to one of the claims 1 or 2,
**characterised in that**
the transponder unit (3) comprises a near field receiver (32) for receiving the second field (62) and / or the base unit (1) comprises a near field generator (12) for generating the second field (62).

4. System according to one of the claims 1 to 3,
**characterised in that**
- the transponder unit (3) comprises a receiver for receiving the first field (61) and
- the transponder unit (3) is designed for a cyclical activation of the receiver.

5. System according to one of the claims 1 to 4,
**characterised in that**
the first field (61) is continuously generated.

6. System according to one of the claims 1 to 5,
**characterised in that**
the transponder unit (3) comprises, in particular for receiving the first field (61) and for generating the transponder signal, a transceiver (31), preferably a low power radio transceiver, in particular with a separate transmitter and a separate receiver, and / or the base unit (1) comprises, in particular for generating the first field (61) and for receiving the transponder signal, a transceiver (11), preferably a low power radio transceiver, in particular with a separate transmitter and a separate receiver.

7. System according to one of the claims 1 to 6,
**characterised in that**
the frequency of the first field (61) lies in the range of from 13.56 MHz, 433 MHz, 868 MHz and / or 2480 MHz, and / or
the frequency of the second field (62) lies between 0.1 Hz and 2.5 GHz.

8. System according to one of the claims 1 to 7,
**characterised in that**
- a plurality of transponder units (3) are provided, and
- the transponder units (3) respectively generate different transponder signals.

9. System according to claim 8,
**characterised in that**
the transponder signals of the transponder units (3) have the same transmission frequency, and
the transponder units (3) and / or the base unit (1) are preferably adapted for a time multiplexing process for transponder signal transmission.

10. System according to one of the claims 8 or 9,
**characterised in that**
the base unit (1) comprises a display (26), in particular a light emitting diode display, for displaying the number of transponder signals received.

11. System according to one of the claims 1 to 10,
**characterised in that**
the at least one transponder unit (3) is designed to modulate an identification code to the respective transponder signal, and
the base unit (1) is designed to demodulate the identification code.

12. System according to claim 11,
**characterised in that**
the base unit (1) is adapted to take into consideration the received transponder signal of a transponder unit (3) in the generation of the alarm signal only when the demodulated identification code of the transponder signal coincides with at least one identification code stored in the base unit (1).

13. System according to one of the claims 11 or 12,
**characterised in that**
the base unit (1) is adapted to store the identification code at least of a received transponder signal in the presence of an acknowledgment signal in an acknowledgement memory, and
subsequently to leave the transponder signal with the identification code stored in the acknowledgement memory out of consideration at least temporally in the generation of the alarm signal.

14. System according to claim 13,
**characterised in that**
the base unit (1) is adapted to take into consideration the transponder signal with the identification code stored in the acknowledgment memory in the generation of the alarm signal again after the receipt of the transponder signal with the identification code stored in the acknowledgement memory has been interrupted, in particular for a previously determined time.

15. System according to one of the claims 1 to 14,
**characterised in that**
the transponder unit (3) comprises a power source, in particular a battery (48).

16. System according to claim 15,
**characterised in that**
the transponder unit (3) comprises at least one power generation means, for example a solar cell and / or a piezo element, in particular for charging the battery (48).

17. System according to one of the claims 15 or 16,
**characterised in that**
the transponder unit (3) is designed to modulate status data of the power source to the transponder signal, and
the base unit (1) is designed to demodulate and in particular to display the status data from the received transponder signal.

18. System according to one of the claims 1 to 17,
**characterised in that**
the transponder unit (3) can be carried and is in particular arranged on, preferably incorporated into, an item of clothing, an accessory and / or a utility object.

19. Use of a system according to one of the claims 1 to 18 to identify persons in the hazardous area of a machine, especially of a vehicle.

## Revendications

1. Système de surveillance d'une zone dangereuse d'une machine (80), avec
- une unité formant transpondeur (3) qui est agencée pour produire un signal de transpondeur en cas de réception d'un premier champ (61) qui est un champ lointain, et
- une unité de base (1) qui est agencée pour produire le premier champ (61) autour de l'unité de base (1) et pour produire un signal d'alarme en cas de réception du signal de transpondeur depuis l'unité formant transpondeur (3),
***caractérisé***
- ***en ce que*** l'unité de base (1) est conformée pour produire au moins un deuxième champ (62) autour de l'unité de base,
- dans lequel le deuxième champ (62) est différent du premier champ (61) et est un champ proche,
- ***en ce que*** l'unité formant transpondeur (3) est agencée pour modifier la caractéristique du signal de transpondeur lorsqu'elle reçoit le deuxième champ (62), et
- ***en ce que*** l'unité de base (1) est agencée pour émettre un signal d'alarme modifié lorsque la caractéristique du signal de transpondeur reçu change.

2. Système selon la revendication 1, ***caractérisé en ce que*** l'unité de base (1) est placée sur la machine (80) et l'unité formant transpondeur (3) sur un objet menacé, en particulier une personne menacée (70).

3. Système selon l'une quelconque des revendications 1 ou 2, ***caractérisé***
***en ce que*** l'unité formant transpondeur (3) comprend un récepteur (32) de champ proche pour recevoir le deuxième champ (62) et/ou ***en ce que*** l'unité de base (1) comprend un générateur (12) de champ proche pour produire le deuxième champ (62).

4. Système selon l'une quelconque des revendications 1 à 3, ***caractérisé***
- ***en ce que*** l'unité formant transpondeur (3) comprend un récepteur pour recevoir le premier champ (61), et
- ***en ce que*** l'unité formant transpondeur (3) est conformée pour une activation cyclique du récepteur.

5. Système selon l'une quelconque des revendications 1 à 4, ***caractérisé en ce que*** le premier champ (61) est produit de manière continue.

6. Système selon l'une quelconque des revendications 1 à 5, ***caractérisé***
***en ce que*** l'unité formant transpondeur (3), en particulier pour recevoir le premier champ (61) et pour produire le signal de transpondeur, comprend un émetteur-récepteur (31), de manière préférée un émetteur-récepteur radio de faible puissance, en particulier avec un émetteur séparé et un récepteur séparé, et/ou
***en ce que*** l'unité de base (1), en particulier pour produire le premier champ (61) et pour recevoir le signal de transpondeur, comprend un émetteur-récepteur (11), de manière préférée un émetteur-récepteur radio de faible puissance, en particulier avec un émetteur séparé et un récepteur séparé.

7. Système selon l'une quelconque des revendications 1 à 6, ***caractérisé***
***en* ce *que*** la fréquence du premier champ (61) est comprise dans le domaine de 13,56 MHz, 433 MHz, 868 MHz et/ou 2480 MHz, et/ou
***en ce que*** la fréquence du deuxième champ (62) est située entre 0,1 Hz et 2,5 GHz.

8. Système selon l'une quelconque des revendications 1 à 7, ***caractérisé***
- ***en ce que*** plusieurs unités formant transpondeur (3) sont prévues, et
- ***en ce que*** les unités formant transpondeur (3) produisent chacune différents signaux de transpondeur.

9. Système selon la revendication 8, ***caractérisé***
***en ce que*** les signaux de transpondeur des unités formant transpondeur (3) présentent la même fréquence d'émission, et
***en ce que*** les unités formant transpondeur (3) et/ou l'unité de base (1) sont agencées de manière préférée pour un procédé de multiplexage temporel pour la transmission des signaux de transpondeur.

10. Système selon l'une quelconque des revendications 8 ou 9, ***caractérisé en ce que*** l'unité de base (1) comprend un affichage (26), en particulier un affichage par diodes lumineuses, afin d'afficher le nombre de signaux de transpondeur reçus.

11. Système selon l'une quelconque des revendications 1 à 10, ***caractérisé***
***en* ce *qu'*au** moins une unité formant transpondeur (3) est agencée pour appliquer par modulation un code d'identification sur le signal de transpondeur respectif, et
***en ce que*** l'unité de base (1) est conformée pour démoduler le code d'identification.

12. Système selon la revendication 11, ***caractérisé en ce que*** l'unité de base (1) est agencée pour que le signal de transpondeur produit par une unité formant transpondeur (3) ne soit pris en compte, lors de la production du signal d'alarme, que lorsque le code d'identification démodulé du signal de transpondeur coïncide avec au moins un code d'identification enregistré dans l'unité de base (1).

13. Système selon l'une quelconque des revendications 11 ou 12, ***caractérisé***
***en ce que*** l'unité de base (1) est agencée pour enregistrer le code d'identification d'au moins un signal de transpondeur reçu en cas de présence d'un signal d'acquittement dans une mémoire d'acquittement, et
ensuite pour ne pas prendre en compte, au moins temporairement, le signal de transpondeur avec le code d'identification enregistré dans la mémoire d'acquittement lors de la production du signal d'alarme.

14. Système selon la revendication 13, ***caractérisé en ce que*** l'unité de base (1) est agencée pour tenir de nouveau compte du signal de transpondeur avec le code d'identification enregistré dans la mémoire d'acquittement lors de la production du signal d'alarme, après que la réception du signal de transpondeur avec le code d'identification enregistré dans la mémoire d'acquittement ait été interrompue, en particulier pendant un temps prédéterminé.

15. Système selon l'une quelconque des revendications 1 à 14, ***caractérisé en ce que*** l'unité formant transpondeur (3) comprend une source électrique, en particulier une batterie (48).

16. Système selon la revendication 15, ***caractérisé en ce que*** l'unité formant transpondeur (3) comprend au moins un dispositif producteur d'électricité, par exemple une cellule solaire et/ou un élément piézoélectrique, en particulier pour charger la batterie (48).

17. Système selon l'une quelconque des revendications 15 ou 16, ***caractérisé***
***en ce que*** l'unité formant transpondeur (3) est agencée pour appliquer par modulation des données d'état de la source électrique sur le signal de transpondeur, et
***en ce que*** l'unité de base (1) est agencée pour démoduler les données d'état à partir du signal de transpondeur reçu et en particulier pour les afficher.

18. Système selon l'une quelconque des revendications 1 à 17, ***caractérisé en ce que*** l'unité formant transpondeur (3) est portative et est, de manière préférée, montée en particulier sur une pièce d'habillement, un accessoire et/ou un objet d'usage courant.

19. Utilisation d'un système selon l'une quelconque des revendications 1 à 18 pour surveiller des personnes dans une zone dangereuse d'une machine, en particulier d'un véhicule.
